Europäisches Patentamt

European Patent Office

Office européen des brevets

(19)

(11) Veröffentlichungsnummer: **0 171 705 B1**

## (12) EUROPÄISCHE PATENTSCHRIFT

(45) Veröffentlichungstag der Patentschrift: **17.07.91**

(51) Int. Cl.5: **A01C 5/06**

(21) Anmeldenummer: **85109604.0**

(22) Anmeldetag: **31.07.85**

(54) Drillmaschine.

(30) Priorität: **09.08.84 DE 3429318**

(43) Veröffentlichungstag der Anmeldung:
**19.02.86 Patentblatt 86/08**

(45) Bekanntmachung des Hinweises auf die
Patenterteilung:
**17.07.91 Patentblatt 91/29**

(84) Benannte Vertragsstaaten:
**AT BE CH DE FR GB IT LI LU NL SE**

(56) Entgegenhaltungen:
**DE-B- 2 726 340
FR-A- 1 099 128
GB-A- 2 054 331
US-A- 1 747 525
US-A- 3 202 119**

**SOVIET INVENTIONS ILLUSTRATED, 17. April
1985, Seite 11, Derwent Publications Ltd.,
Section General/Mechanical, Week 8510, Zusammenfassung Nr. 85061189; & SU-A-11 077
774 (VORON FORESTRY INSTITUTE)
15-08-1984**

(73) Patentinhaber: **Amazonen-Werke H. Dreyer
GmbH & Co. KG
Postfach 51
W-4507 Hasbergen-Gaste(DE)**

(72) Erfinder: **Gehrke, Rudolf
Lärchenweg 6
W-2990 Papenburg(DE)**
Erfinder: **Gattermann, Bernd
Eichenwall 3
W-2872 Hude i.O.(DE)**
Erfinder: **Steenken, Bernhard
Waldhöfe 17
W-4475 Sögel 2(DE)**

(74) Vertreter: **Patentanwälte Grünecker, Kinkeldey, Stockmair & Partner
Maximilianstrasse 58
W-8000 München 22(DE)**

Anmerkung: Innerhalb von neun Monaten nach der Bekanntmachung des Hinweises auf die Erteilung des
europäischen Patents kann jedermann beim Europäischen Patentamt gegen das erteilte europäische Patent
Einspruch einlegen. Der Einspruch ist schriftlich einzureichen und zu begründen. Er gilt erst als eingelegt, wenn
die Einspruchsgebühr entrichtet worden ist (Art. 99(1) Europäisches Patentübereinkommen).

**Beschreibung**

Die Erfindung bezieht sich auf eine Drillmaschine mit Säscharen noch dem Oberbegriff des Anspruches 1.

Eine derartige Drillmaschine ist durch die DE-PS 27 26 340 bekannt. Bei dieser Drillmaschine sind hinter den Säscharen Zustreicher mit zwei gleichlangen Zustreichelementen angeordnet, wobei sich die Zustreicher jeweils hinter dem mittleren Bereich zwischen je zwei Säscharen der hinteren Querreihe befinden. Wenn die Zustreicher in vorgeschriebener Weise hinter dem mittleren Bereich zwischen zwei Säscharen der hinteren Querreihe angeordnet sind, verrichten diese Zustreicher ausgezeichnete Zustreicharbeit.

Bei der bekannten Drillmaschine ist es erforderlich, daß die Zuctreichelemente immer genau auf die Säscharen eingestellt werden müssen. In der Praxis werden Drillmaschinen mit unterschiedlichen Reihenweiten zwishen den Säscharen eingesetzt, d.h. bei einigen Drillmaschinen sind die Säschare mit größerer Reihenweiten und bei anderer Drillmaschinen mit kleineren Reihenweiten angeordnet. Bisher mußten für jede Reihenweite die an den hinter den Säscharen an den Drillmaschinen angeordneten Schienen montierten Zustreicher auf die entsprechende Reihenweite zwischen den Säscharen eingestellt werden. Dies bedeutete in der Praxis, daß man eine große Anzahl von Schienen von unterschiedlich an den Schienen montierten Zustreichern erhielt; d.h. es ergaben sich eine große Anzahl Schienen mit daran angeordneten Zustreichern in vielfältiger Ausfertigung. Wird dann bei einer Drillmaschine eine Schiene mit nicht auf die entsprechende Reihenweite der Säschar eingestellten Zustreichern verwendet, streichen die Zustreicher die Säfurche nicht bzw. nur in unzureichender und ungleichmäßiger Weise zu.

Weiterhin ist aus der US-A-3 202 119 eine Drillmaschine bekannt, bei der hinter den Säscharen eine Reihe von Zustreichern angeordnet sind, die in Fahrtrichtung gegeneinander versetzt sind. Die Enden der Zustreichelemente der Zustreicher überlappen einander, quer zur Fahrtrichtung gesehen. Diese bekannte Anordnung der Zustreicher führt zu einer erhöhten Verstopfungsgefahr hinter den Säscharen.

Es ist Aufgabe der vorliegenden Erfindung, eine Drillmaschine der eingangs genannten Art unter Vermeidung der geschilderten Nachteile zu verbessern und die Einstellung der Zustreicher wesentlich zu vereinfachen.

Gelöst wird diese Aufgabe mit einer Drillmaschine mit den Merkmalen des Anspruches 1.

Infolge dieser Merkmale können die Zustreicher so eingestellt werden, daß sie mit dieser einen Einstellung für verschiedene Reihenweiten der Säreihen eingesetzt werden können. Somit werden in jedem Falle die von den Säscharen erzeugten Erdwälle eingeebnet und die im Boden abgelegten Saatkörner in jedem Fall mit Erde bedeckt. Es wirkt sich vorteilhaft aus, daß nur eine Ausführung von Zustreichern für sämtliche Reihenweisen erforderlich ist. Selbst bei leichten Kurvenfahrten mit der Drillmaschine bzw. beim Einsäen am Hang wird noch eine gleichmäßige Zustreicharbeit sichergestellt. Weiterhin wird hierdurch erreicht, daß die Erde zunächst von den Zustreichelementen mit kürzerer Längskomponente quer zur Fahrtrichtung, also mit geringerem, seitlichen Wirkungsbereich zu der einen Seite und dann von den Zustreichelementen mit quer zur Fahrtrichtung Rängeren Längskomponenten, also mit breiterem Wirkungsbereich zur anderen Seite hin bewegt wird. Dieses zumindest teilweise Hin- und Herbewegen der Erde, die das Saatgut bedecken soll, ist für die gleichmäßige Bedeckung und das gleichmäßige Einebnen von entscheidender Bedeutung. Dieses zickzackförmige Hin- und Herbewegen der Erde wird durch die abwechselnde Anordnung der Zustreichelemente in der beschriebenen Art und Weise erreicht.

In einer konkreten Ausgestaltung haben die Zustreichelemente mit kürzeren Längskomponente quer zur Fahrtichtung eine geringere Länge als die Zustreichelemente mit Längerer Längskomponente quer zur Fahrtrichtung.

Damit die auf alle Zustreicher einwirkenden Kräfte sich gegenseitig aufheben und damit die Erde von den längeren Zustreichelementen nicht einseitig in eine Richtung verlagert wird, ist erfindungsgemäß vorgesehen, daß in Fahrtrichtung gesehen bei einer Gruppe der Zustreicher das längere Zustreichelement jeweils nach rechts weist und bei der anderen Gruppe der Zustreicher das längere Zustreichelement jeweils nach links weist.

Damit auch im Schnittpunkt des Wechsels von der einen Gruppe auf die andere Gruppe eine einwandfreie Zustreicharbeit geleistet wird, ist erfindungsgemäß vorgesehen, daß sich im Schnittpunkt beim Wechsel vor der einen Gruppe zu der anderen Gruppe von Zustreichern zwei längere Zustreichelemente nebeneinander befinden. Hierbei ist in einer bevorzugten Ausführung vorgesehen, daß die beiden längeren Zustreichelemente des Zustreichers der in dem Schnittpunkt beim Wechsel von der einen Gruppe zu der anderen Gruppe von Zustreichern zu einem Zustreicher zusammengefaßt sind. Hierdurch ergibt sich eine einfache Ausführung für diesen Zustreicher.

In einer bevorzugten Ausführung ist erfindungsgemäß vorgesehen, daß zumindest etwa in der Maschinenmitte ein Zustreicher angeordnet ist, der zwei zumindest annähernd gleichlange längere Zustreichelemente aufweist. Hierdurch ergibt sich bei einer einfachen Montage- und Einstellarbeit der Zustreicher eine gute und gleichmäßige Zustreichwirkung durch die Zustreicher bei dem Säen auf dem Acker. Damit auch in dem Bereich dieses "mittleren" Zustreichers mit den beiden längeren Zustreichelementen eine gleichmäßige Bedeckung des Saatgutes mit Erde erreicht wird, ohne daß hier ein Erdwall entsteht, ist erfindungsgemäß vorgesehen,, daß die von dem mittleren Zustreicher mit den beiden längeren Zustreichelementen aus gesehen seitlich neben diesem Zustreicher angeordneten Zustreicher derart angeordnet sind, daß die längeren Zustreichelemente nach außen und die kürzeren Zustreichelemente zu dem mit den beiden längeren Zustreichelementen versehenen Zustreicher weisen.

Eine besonders einfache Ausführung der erfindungsgemäßen Zustreichelemente wird dadurch erreicht, daß die kürzeren und längeren Zustreichelemente der Zustreicher aus einem Stück hergestellt sind. Hierbei ist dann das längere Zustreichelement an der hinteren Seite des kürzeren Zustreichelementes angeordnet.

Damit auch in den äußeren Bereichen der Drillmaschine im Bereich der Lauräder bzw. der äußeren Säschare eine gleichmäßige Zustreicharbeit erreicht wird, ist erfindungsgemäß vorgesehen, daß in den beiden äußeren Bereichen der Drillmaschine hinter den Laufrädern und/oder den äußersten Säscharen zumindest ein Zustreicher mit zumindest einem schräg zur Maschinenmitte abgebogenen Zustreichelement angeordnet ist.

Damit auch bei schwierigen Verhältnissen in den äußeren Bereichen das Saatgut gleichmäßig mit Erde bedeckt wird bwz. die Laufradspuren zumindest teilweise eingeebnet werden, ist erfindungsgemäß vorgesehen, daß in den äußeren Bereichen der Drillmaschine zwei schräg zur Maschinenmitte abgebogene Zustreichelemente angeordnet sind, daß die Zustreichelemente unterschiedlich lang sind und daß das äußere Zustreichelement länger als das direkt innen benachbarte Zustreichelement ist.

Gemäß einer vorteilhaften Ausführungsform ist vorgesehen, daß sich zwischen dem Ende des kürzeren Zustreichelementes, welches vor dem längeren Zustreichelement endet, und dem längeren Zustreichelement ein größerer Abstand befindet.. Dies ist günstig, damit auch größere Kluten ohne Störung nach hinten fließen können. Weiterhin wird hierdurch sichergestellt, daß Zustreichelemente sich immer wieder selbst von anhaftenden Erd- oder Pflanzenteilen freiarbeiten können. Denn diese Teile werden durch das Gleiten der Zustreichelemente auf dem Boden von den Zustreichelementen abgestreift.

Hierbei hat sich bei praktischen Versuchen ein Mindestabstand herausgestellt, der etwa dem mittleren Durchmesser der gröberen auf der Bodenoberfläche sich befindlichen Kluten entspricht. In einfacher Weise wird man jedoch in vielen Fällen einen Abstand wählen, der etwa der Länge des kürzeren Zustreichelementes entspricht.

Damit die Erde von den Zustreichelementen ausreichend hin- und herbewegt und somit eine gleichmäßige Einebnung der Erddämme, die von den Säscharen erzeugt werden, erfolgt, ist erfindungsgemäß vorgesehen, daß das Maß der Überlappung etwa der Länge des kürzeren Zustreichelementes entspricht. Hierbei wird ein optimales Verhältnis zwischen dem kürzeren und längeren Zustreichelement dadurch erreicht, daß das längere Zustreichelement zumindest die doppelte Länge, vorzugsweise etwa die dreifache Länge des kürzeren Zustreichelementes aufweist. Hierdurch wird in einfacher Weise eine sichere Überlappung der Zustreichelemente bei einer verstopfungssicheren Zustreicharbeit erreicht, wobei eine gleichmäßig eingeebnete Bodenoberfläche erreicht wird.

Weitere Einzelheiten der Erfindung sind den übrigen Unteransprüchen, der Beispielsbeschreibung und den Zeichnungen zu entnehmen. Hierbei zeigen

Fig. 1 eine erfindungsgemäß ausgerüstete Drillmaschine in der Seitenansicht,

Fig. 2 die Anordnung der erfindungsgemäßen Zustreicher in Prinzipdarstellung in der Draufsicht und

Fig. 3 die Anordnung erfindungsgemäßer Zustreicher in einer anderen Ausführung ebenfalls in Prinzipdarstellung und in der Draufsicht.

Die Drillmaschine ist min einem Vorratsbehälter 1 und einem Rahmen ausgestattet, der sich im Betrieb über die Laufräder 2 auf der Bodenoberfläche 3 abstützt und an dem die Säschare 4 mit Hilfe der Scharhalter 5 in zwei hintereinander liegenden Querreihen 6 und 7 abwechselnd auf Lükke zueinander und in aufrechter Ebene schwenkbar angeordnet sind. Hinter den Säscharen 4 sind an der quer zur Fahrtrichtung 8 verlaufenden Schiene 9, die über die Streben 10 an der Drillmaschine befestigt ist, die Zustreicher 11 angeordnet.

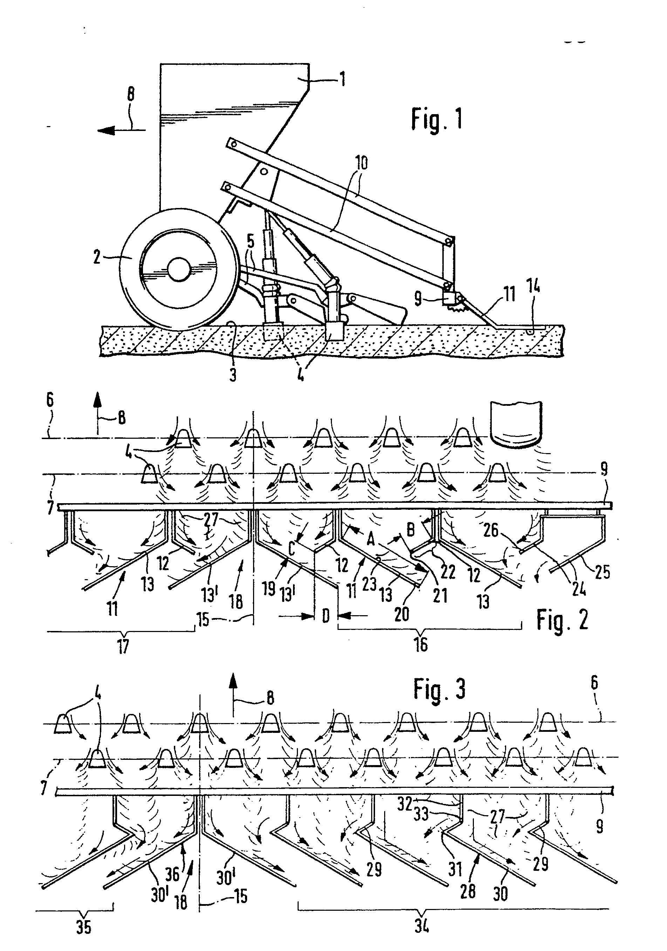

Die Zustreicher 11 gemäß Fig. 1 und 2 weisen jeweils ein kürzeres schräg zur Fahrtrichtung 8 angestelltes Zustreichelement 12 und ein längeres schräg zur Fahrtrichtung 8 angestelltes Zustreichelement 13 auf. Die Zustreicher sind aus einen Federdraht mit rundem Querschnitt hergestellt. Die unteren Kanten 14 der Zustreichelemente 12 und 13 verlaufen in Betriebsstellung parallel zur Bodenoberfläche 3. Die Zustreicher 11 sind von der Maschinenmitte 15 aus in den beiden Gruppen 16 und 17 angeordnet. Bei der Gruppe 16, die sich rechts von der Maschinenmitte 15 befindet, ist das längere Zustreichelement 13 jeweils nach schräg rechts hinten und das kürzere Zustreichelement 12 jeweils nach schräg links hinten. Bei der Gruppe 17, die sich links von der Maschinenmitte 15 befindet, weist das längere Zustreichelement 13 jeweils nach schräg links hinten und das kürzere Zustreichelement 12 jeweils nach schräg rechts hinten. Somit weisen die längeren Zuctreichelemente 13 von der Maschinenmitte 15 aus gesehen jeweils schräg nach hinten außen und die kürzeren Zustreichelemente 12 von der Maschinenmitte 15 aus gesehen jeweils schräg nach hinten zur Maschinenmitte 15. In dem Schnittpunkt 18 des Wechsels von der Gruppe 16 zu der Gruppe 17 der Zustreicher 11 befinden sich zwei längere Zustreichelemente 13', die entgegengesetzt schräg angeordnet sind, nebeneinander. Diese Zustreicher 13'sind zu dem Zustreicher 19 zusammengefaßt.

Das längere Zustreichelement 13 weist jeweils eine Länge A von etwa 29 cm und das kürzere Zustreichelement 12 weist jeweils eine Länge B von etwa 9 cm auf. Das längere Zustreichelement 13 weist die dreifache Länge des kürzeren Zustreichelementes 12 auf.

Durch das hintere Ende 20 eines längeren Zustreichelementes 13 wird das Ende 21 des jeweils benachbarten kürzeren Zustreichelementes 12 bzw. der Wirkungsbereich 22 des kürzeren Zustreichelementes 12 zumindest teilweise überlappt. Das hintere Ende 21 des kürzeren Zustreichelementes 12 endet in dem größeren Abstand C vor der jeweiligen Seitenfläche 23 des jeweiligen längeren Zustreichelementes 13. Der Abstand C entspricht in etwa dem mittleren Durchmesser der gröberen auf der Bodenoberfläche 3 sich befindlichen Kluten. Vorzugsweise entspricht der Abstand C der Länge B des kürzeren Zustreichelementes 12. Das Maß der Überlappung D des kürzeren Zustreichelementes 12 Durch das hintere Ende 20 des längeren Zustreichelementes 13 entspricht in etwa der Länge B, zumindest jedoch der halben Länge B des kürzeren Zustreichelementes 12.

In den äußeren Bereichen der Drillmaschine sind jeweils hinter den Laufrädern 2 und den äußeren Säscharen 4 die Zustreicher 24 angeordnet. Jeder dieser Zustreicher 24 weist die beiden zur Maschinenmitte 15 hin abgebogenen Zustreichelemente 25 und 26 auf. Diese Zustreichelemente 25 und 26 sind unterschiedlich lang, wobei das äußere Zustreichelement 25 länger als das direkt innen benachbarte Zustreichelement 26 ist. Das hintere Ende des äußeren Zustreichelementes 25 überlappt das Zustreichelement 26 in Fahrtrichtung 8 gesehen ein kurzes Stück. Die Zustreichelemente 25 und 26 ebnen die Laufradspuren des jeweiligen Laufrades 2 und die äußere von den Säscharen 4 erzeugten Erddämme ein und bedecken das Saatgut gleichmäßig mit Erde.

Die Funktionsweise der Zustreicher läßt sich folgendermaßen beschreiben:

Von den Säscharen 4 wird das Saatgut in den Säscharen 4 in den Boden gezogenen Säfurchen abgelegt. Hinter den Säscharen 4 bleiben die Säfurchen teilweise offen, so daß das Saatgut nicht mit Erde bedeckt ist. Weiterhin erzeugen die Säschare 4 durch Schaffen der Säfurchen Erddämme 27. Diese Erddämme 27 werden von den Zusteichern eingeebnet und die Erde dieser Erddämme 27 wird von den Zustreichern verteilt, so daß die Saatkörner gleichmäßig mit Erde bedeckt werden.

Die kürzeren Zustreichelemente 12 bewegen die Erde eines Teiles der Erddämme 27 zumindest in Richtung der längeren Zustreichelemente 13 bzw. 13', wie dieses durch die kleinen Pfeile in Fig. 2 angedeutet ist. Die längeren Zustreichelemente 13 bzw. 13' bewegen die Erde der Erddämme 27 in die andere Richtung, wie dieses ebenfalls durch die kleinen Pfeile in Fig. 2 angedeutet ist. Somit wird ein Teil der Erde von den Zustreichelementen 12 und 13 sowie 13' in Zick-Zack-Linien hin- und herbewegt. Hierdurch entsteht eine gleichmäßige Bodenoberfläche und eine gleichmäßige Bedekkung des Saatgutes mit Erde. Durch das direkte Hin- und Herbewegen eines Teiles der Erde der Erddämme 27 wird die Erde gleichmäßig verteilt, wobei ein Teil der Erde über die Zustreichelemente 12 und 13 bzw. 13' hinwegfließt und somit zum gleichmäßigen Zudecken der Saatkörner beiträgt. Durch den Abstand C zwischen den längeren und kürzeren Zustreichelementen 12 und 13 wird ein Einklemmen von Kluten und Pflanzenresten zwischen den Zustreichelementen 12 und 13 vermieden.

Bei dem Ausführungsbeispiel gemäß Fig. 3 sind hinter den Säscharen 4 an der Maschine 9 die Zustreicher 28 angeordnet. Die Zustreicher 28 weisen jeweils das kürzere Zustreichelement 29 und das längere Zustreichelement 30 auf, die jeweils schräg nach hinten zur Fahrtrichtung angestellt sind. Die kürzeren und die längeren Zustreichelemente 29 und 30 des Zustreichers 28 sind jeweils aus einem Stück hergestellt. Die Zustreicher 28 sind aus einem Stück Federdraht mit vorzugtweise rundem Querschnitt gefertigt. Das längere Zustreichelement 30 ist an dem hinteren Ende 31 des kürzeren Zustreichelementes 29 angeordnet. Der Zustreicher 28 ist mit der Strebe 32 an der Schiene 9 befestigt. An dem hinteren Ende 33 der Strebe 32 ist der Zustreicher zunächst für die Bildung des kürzeren Zustreichelementes 29 abgebogen. An dem hinteren Ende 31 des kürzeren Zustreichelementes 29 ist dann der Zustreicher zu anderen Seite nach schräg hinten für die Bildung des längeren Zustreichelementes 30 abgebogen. Die Zustreicher 28 sind ebenfalls wie die Zustreicher 11 gemäß Fig. 1 in zwei Gruppen angeordnet, so daß in der rechten Gruppe 34 der Zustreicher 28 die längeren Zustreichelemente 30 nach rechts hinten und in der linken Gruppe 35 der Zustreicher 28 die längeren Zustreichelemente 30 nach links hinten jeweils von der Maschinenmitte 15 aus weisen. In dem Schnittpunkt zwischen den beiden Gruppen 34 und 35 der Zustreicher 28 ist der die zwei längeren Zustreichelemente 30' aufweisende Zustreicher 36 angeordnet. Die Funktionsweise der Zustreicher 28 entspricht den Zustreichern 11 gemäß Fig. 2.

## Patentansprüche

1. Drillmaschine mit Säscharen (4), die abwechselnd in zumindest zwei Querreihen auf Lücke angeordnet sind, und mit hinter den Säscharen (4) zugeordneten Zustreichern (11; 18; 19; 30; 36), die jeweils zwei an Streben (32) befindlichen und nach hinten schräg zur Fahrtrichtung angestellte Zustreichelemente (12, 13; 29, 30) aufweisen, deren untere Kanten in Betriebsstellung zumindest annähernd parallel zur Bodenoberfläche verlaufen, wobei die Zustreicher an einer Quer zur Fahrtrichtung (8) verlaufenden Schiene (9) angebracht sind, dadurch **gekennzeichnet,** daß Zustreichergruppen (16,17,34,35) vorgesehen sind, wobei die Zustreicher (11,28) der Zustreichergruppen jeweils ein vorderes und ein hinteres, schräg angestelltes Zustreicherelement (12,13,29,30) mit unterschiedlicher Längskomponente quer zur Fahrtrichtung aufweisen, die derart angeordnet sind, daß ein die kürzere Längskomponente quer zur Fahrtrichtung aufweisendes Zustreicherelement (12,29) einem die längere Längskomponente quer zur Fahrtrichtung aufweisenden Zustreicherelement (13,30) des benachbarten Zustreichers (11,28) benachbart ist, und daß die Enden (21) der die kürze Längskomponente quer zur Fahrtrichtung aufweisenden Zustreicherelemente (12,29) vor den Seitenflächen (23) der die längere Längskomponente quer zur Fahrtrichtung aufweisenden Zustreicherelemente (13,30) enden.

2. Drillmaschine nach Anspruch 1, dadurch **gekennzeichnet,** daß die die kürzere Längskomponente quer zur Fahrtrichtung aufweisenden Zustreicherelemente (12; 29) kürzer als die die längere Längskomponente quer zur Fahrtrichtung aufweisenden Zustreicherelemente (13; 30) sind.

3. Drillmaschine nach Anspruch 2 dadurch gekennzeichnet, daß in Fahrtrichtung (8) gesehen bei einer Gruppe (16, 34) der Zustreicher (11, 28) das längere Zustreichelement (13, 30) jeweils nach rechts weist und bei der anderen Gruppe (17, 35) der Zustreicher (11, 28) das längere Zustreichelement (13, 30) jeweils nach links weist.

4. Drillmaschine nach Anspruch 3 dadurch gekennzeichnet, daß sich Im Schnittpunkt (18) beim Wechsel von der einen Gruppe (16,34) zu der anderen Gruppe (17,35) von Zustreichern (11,28) zwei längere Zustreichelemente (13', 30') nebeneinander befinden.

5. Drillmaschine nach Anspruch 4, dadurch **gekennzeichnet,** daß die beiden längeren Zustreichelemente (13', 30') des Zustreichers (19,36), der in dem Schnittpunkt (18) beim Wechsel von der einen Gruppe (16,34) zu der anderen Gruppe (17,35) von Zustreichern (11,28) angeordnet ist zu einem Zustreicher (19,36) zusammengefaßt sind.

6. Drillmaschine nach Anspruch 1, dadurch **gekennzeichnet,** daß zumindest etwa in der Maschinenmitte (15) ein Zustreicher (19,36) angeordnet ist, der zwei zumindest annähernd gleichlange längere Zustreichelemente (13', 30') aufweist.

7. Drillmaschine nach mindestens einem der Ansprüche 2 bis 6, dadurch **gekennzeichnet,** daß die von dem Zustreicher (19,36) mit den beiden längeren Zustreichelementen (13', 30') aus gesehen seitlich neben diesem Zustreicher (19,36) angeordneten Zustreicher (11,28) derart angeordnet sind, daß die längeren Zustreichelemente (13,30) nach außen und die kürzeren Zustreichelemente (12,29) zu dem mit den beiden längeren Zustreichelementen (13',30') versehenen Zustreicher weisen.

8. Drillmaschine nach einem der Ansprüche 2 bis 7 dadurch gekennzeichnet , daß die kürzeren und längeren Zustreichelemente (29,30) der Zustreicher (28) aus einem Stück hergestellt sind.

9. Drillmaschine nach Anspruch 8, dadurch **gekennzeichnet,** daß der längere Zustreichelement (30) an dem hinteren Ende (31) des kürzeren Zustreichelementes (29) angeordnet ist.

10. Drillmaschine nach Anspruch 8 und 9, **dadurch gekennzeichnet,** daß der Zustreicher (28) an dem unteren Ende (31) der Strebe (32) zunächst schräg für die Bildung des kürzeren Zustreichelements (29) abgebogen ist, und daß der Zustreicher am hinteren Ende (31) des kürzeren Zustreichelementes (29) dann schräg zur anderen Seite nach hinten für die Bildung des längeren Zustreichelementes (30) abgebogen ist.

11. Drillmaschine nach mindestens einem der Ansprüche 1 bis 10, **dadurch gekennzeichnet,** daß in den beiden äußeren Bereichen der Drillmaschine hinter den Laufrädern (2) und/oder den äußersten Säscharen (4) jeweils zumindest ein Zustreicher (24) mit zumindest einem schräg zur Maschinenmitte (15) abgebogenen Zustreichelement (25,26) angeordnet ist.

12. Drillmaschine nach Anspruch 11, **dadurch gekennzeichnet,** daß in den äußeren Bereichen der Drillmaschine zwei schräg zur Maschinenmitte (15) abgebogene Zustreichelemente (25,26) angeordnet sind, daß die Zustreichelemente (25,26) unterschiedlich lang sind, und daß das äußere Zustreichelement (25) länger als das direkt innen benachbarte Zustreichelement (26) ist.

13. Drillmaschine nach Anspruch 2, dadurch gekennzeichnet, daß die Enden (21) der kürzeren Zustreichelemente (12; 29) vor den Seiten (23) der längeren Zustreichelemente (13; 30) in einem größeren Abstand (C) enden.

14. Drillmaschine nach Anspruch 13, dadurch gekennzeichnet, daß der Abstand (C) zumindest etwa dem mittleren Durchmesser der gröberen auf der Bodenoberfläche (2) befindlichen Kluten entspricht.

15. Drillmaschine nach Anspruch 13 oder 14, dadurch gekennzeichnet, daß der Abstand (C) etwa der Länge (B) des kürzeren Zustreichelementes (12, 29) entspricht.

16. Drillmaschine nach mindestens einem der Ansprüche 2 bis 15, dadurch gekennzeichnet, daß das Maß der Überlappung (D) zumindest der halben Länge (B) des kürzeren Zustreichelementes (12, 29) entspricht.

17. Drillmaschine nach Anspruch 16, dadurch gekennzeichnet, daß das Maß der Überlappung (D) etwa der Länge (B) des kürzeren Zustreichelementes (12, 29) entspricht.

18. Drillmaschine nach mindestens einem der Ansprüche 2 bis, dadurch gekennzeichnet, daß das längere Zustreichelement (13, 30) zumindest die dopplete Länge (B), vorzugsweise etwa die dreifache Länge (B) des kürzeren Zustreichelementes (12, 29) aufweist.

## Claims

1. A seed drill with sowing coulters (4) which are disposed alternately and in staggered configuration in at least two transverse rows, and with deflectors (11; 18; 19; 30; 36) located behind the sowing coulters (4), each of which has, located on struts (32) and oriented obliquely relative to the direction of travel, at least two associated deflector elements (12,13;29,30) whose lower edges in the operative position extend at least approximately parallel to the ground surface, the deflectors being attached on a rail (9) extending transversely to the direction of travel, characterised in that

   deflector groups (16, 17 34, 35) are provided, the deflectors (11, 28) of the deflector groups each having a forward and rear, obliquely-oriented deflector element (12, 13, 29, 30) with a different component of length transverse to the direction of travel, said deflector elements being so disposed that a deflector element (12, 29) having the smaller component of length transverse to the direction of travel is adjacent to a deflector element (13, 30) of the adjacent deflector (11, 28), and having the greater component of length transverse to the direction of travel, and that the ends (21) of the deflector elements (12, 29) having the smaller component of length transverse to the direction of travel terminate in front of the side surfaces (23) of the deflector elements (13, 30) having the greater component of length transverse to the direction of travel.

2. A seed drill according to Claim 1, characterised in that the deflector elements (12; 29) having the smaller component of length transverse to the direction of travel are shorter than the deflector elements (13; 30) having the greater component of length transverse to the direction of travel.

3. A seed drill according to Claim 2, characterised in that, seen in the direction of travel, in one group (16, 34) of deflectors (11, 28), the longer deflector element (13, 30) is oriented in each case to the right, and in the other group (17, 35) of deflectors (11, 28), the longer deflector element (13, 30) is oriented in each case to the left.

4. A seed drill according to Claim 3, characterised in that, in the alternation from one group (16, 34) to the other group (17, 35) of deflectors (11, 28), two longer deflector elements (13', 30') are adjacently located in the intersection (18).

5. A seed drill according to Claim 4, characterised in that both the longer deflector elements (13', 30') of the deflector (19, 36) which is disposed in the intersection (18) during the alternation from one group (16, 34) to the other group (17, 35) of deflectors (11, 28), are combined into one deflector (19, 36).

6. A seed drill according to Claim 1, characterised in that there is located at least approximately in the centre (15) of the machine a deflector (19, 36), which has two longer deflector elements (13', 30') of at least approximately equal length.

7. A seed drill according to at least one of Claims 2 to 6, characterised in that the deflectors (11, 28) located laterally next to the deflector (19, 36), seen from this deflector (19, 36) with both longer deflector elements (13', 30'), are so disposed that the longer deflector elements (13,,30) are oriented outwards, and and the shorter deflector elements (12, 29) are oriented towards the deflector provided with the two longer deflector elements (13', 30').

8. A seed drill according to one of Claims 2 to 7, characterised in that the shorter and longer deflector elements (29, 30) of the deflectors (28) are manufactured from one part.

9. A seed drill according to Claim 8, characterised in that the longer deflector element (30) is located on the rear end (31) of the shorter deflector element (29).

10. A seed drill according to Claim 8 and 9, characterised in that the deflector (28) on the lower end (33) of the strut (32) is firstly bent over obliquely in order to form the shorter deflector element (29), and that the deflector at the rear end (31) of the shorter deflector element (29) is then bent over obliquely backwards to the other side in order to form the longer deflector element (30).

11. A seed drill according to at least one of Claims 1 to 10, characterised in that there is located, in both outer regions of the seed drill behind the groundwheels (2) and/or the outermost sowing coulters (4), in each case at least one deflector (24) with at least one deflector element (25, 26) bent over obliquely to the centre (15) of the machine.

12. A seed drill according to Claim 11, characterised in that, in the outer regions of the seed drill, there are located two deflector elements (25, 26) bent over obliquely to the centre (15) of the machine, that the deflector elements (25, 26) are of different lengths, and that the outer deflector element (25) is longer than the directly-adjacent inner deflector element (26).

13. A seed drill according to Claim 2, characterised in that the ends (21) of the shorter deflector elements (12; 29) terminate in front of the sides (23) of the longer deflector elements (13; 30) at a larger spacing.

14. A seed drill according to Claim 13, characterised in that the spacing (C) corresponds roughly to the medial diameter of the coarser of the clods on the ground surface (2).

15. A seed drill according to Claim 13 or 14, characterised in that the spacing (C) roughly corresponds to the length (B) of the shorter deflector element (12, 29).

16. A seed drill according to at least one of Claims 2 to 15, characterised in that the magnitude of the overlap (D) corresponds to at least half the length (B) of the shorter deflector element (12, 29).

17. A seed drill according to Claim 16, characterised in that the magnitude of the overlap (D) corresponds roughly to the length (B) of the shorter deflector element (12, 29).

18. A seed drill according to at least one of Claims 2 to 17, characterised in that the longer deflector element (13, 30) is at least twice the length (B), preferably thrice the length (B) of the shorter deflector element (12, 29).

**Revendications**

1. Semoir comportant des socs de semoir (4) qui sont répartis en alternance dans au moins deux rangées transversales, avec des intervalles, et des racloirs (11, 18, 19, 30, 36) associés derrière les socs de semoir (4), ces racloirs comportant une tige (32) portant chaque fois deux éléments de raclage (12, 13 ; 29, 30) dirigés en biais vers l'arrière par rapport à la direction de déplacement, éléments de raclage dont les arêtes inférieures sont, en position de fonctionnement, au moins sensiblement parallèles à la surface du sol, les racloirs étant montés sur des rails (9) transversaux par rapport à la direction de déplacement (8), semoir caractérisé par des groupes de racloirs (16, 17, 34, 35) sont répartis en groupe, les racleurs (11, 28) des groupes ayant chaque fois un élément de raclage (12, 13, 29, 30) avant et arrière, disposé en biais, et à composantes longitudinales différentes, transversalement à la direction de déplacement, et monté pour qu'un élément de raclage (12, 29) à courte composante longitudinale dans la direction transversale à la direction de déplacement, soit voisin d'un élément de raclage (13, 30) à grande composante de longitudinale, transversalement à la direction de déplacement, cette composante étant dirigée vers l'élément de raclage (12, 29), et en ce que l'extrémité (21) des éléments de raclage (12, 29) à courte composante de longueur dans la direction transversale à la direction de déplacement, se termine avant les surfaces latérales (23) de l'élément de raclage (13, 30) à grande composante longitudinale, transversalement à la direction de déplacement.

2. Semoir selon la revendication 1, caractérisé en ce que les éléments de raclage (12, 29) à courte composante longitudinale, transversalement à la direction de déplacement, sont plus courts que les éléments de raclage (13, 30) à plus grande composante longitudinale, transversalement à la direction de déplacement.

3. Semoir selon la revendication 2, caractérisé en ce que, vu dans la direction de déplacement (8), dans un groupe (16, 34) de racloirs (11, 28), l'élément de raclage long (13, 30) ,est chaque fois dirigé vers la droite et, dans l'autre groupe (17, 35) de racloirs (11, 28), l'élément de raclage long (13, 30) est dirigé vers la gauche.

4. Semoir selon la revendication 3, caractérisé en ce qu'au point d'intersection (18), au passage d'un groupe (16, 34) à l'autre groupe (17, 35) de racloirs (11, 28), on a deux éléments de raclage longs, (13', 30') juxtaposés.

5. Semoir selon la revendication 4, caractérisé en ce que les deux éléments de raclage (13', 30') longs du racloir (19, 36) se trouvent à l'intersection (18), au passage d'un groupe (16, 34) de racloirs (11, 28) à l'autre groupe (17, 35) de racloirs (11, 28) et ils sont réunis pour former un racloir (19, 36).

6. Semoir selon la revendication 1, caractérisé en ce qu'au moins sensiblement au milieu (15) du semoir, il est prévu un racloir (19, 36) comportant des éléments de raclage longs, (13', 30') sensiblement identiques.

7. Semoir selon au moins l'une des revendications 2 à 6, caractérisé en ce que les racloirs (11, 28), qui se trouvent à côté du racloir (19, 36) à deux éléments de raclage longs (13', 30'), sont montés pour que les éléments de raclage longs (13, 30) soient dirigés vers l'extérieur et que les éléments de raclage courts (12, 29) soient tournés vers le racloir à deux éléments de raclage longs (13', 30').

8. Semoir selon l'une des revendications 2 à 7, caractérisé en ce que les éléments de raclage court et long (29, 30) des racloirs (28) sont en une seule pièce.

9. Semoir selon la revendication 8, caractérisé en ce que l'élément de raclage long (30) est prévu à l'extrémité arrière (31) de l'élément de raclage court (29).

10. Semoir selon les revendications 8 et 9, caractérisé en ce que le racloir (28) est tout d'abord recourbé en biais à l'extrémité inférieure (33) de la tige (32) pour former l'élément de raclage court (29) et à l'extrémité arrière (31) de l'élément de raclage court (29), le racloir est recourbé en biais vers l'autre côté et vers l'arrière pour former l'élément de raclage long (30).

11. Semoir selon au moins l'une des revendications 1 à 10, caractérisé en ce que dans les deux zones extérieures du semoir, derrière les roues de roulement (2) et/ou les socs de semoir (4), les plus à l'extérieur, il est prévu au moins un racloir (24) avec au moins un élément de raclage (25, 26) recourbé en biais vers le milieu (15) du semoir.

12. Semoir selon la revendication 11, caractérisé en ce que dans les zones extérieures du semoir, il y a deux éléments de raclage (25, 26) recourbés en biais vers le milieu (15) du semoir et les éléments de raclage (25, 26) ont une longueur différente et l'élément de raclage extérieur (25) est plus long que l'élément de raclage (26) directement voisin du côté intérieur.

13. Semoir selon la revendication 2, caractérisé en ce que les extrémités (21) des éléments de raclage courts (12, 29) se terminent avant les côtés (23) des éléments de raclage longs (13, 30) à une distance plus grande (C).

14. Semoir selon la revendication 13, caractérisé en ce que la distance (C) correspond au moins sensiblement au diamètre moyen des mottes les plus grosses que l'on rencontre à la surface du sol (2).

**15.** Semoir selon l'une des revendications 13 ou 14, caractérisé en ce que la distance (C) correspond sensiblement à la longueur (B) de l'élément de raclage court (12, 29).

**16.** Semoir selon au moins l'une des revendications 2 à 15, caractérisé en ce que la mesure du chevauchement (D) correspond au moins à la demilongueur (B) de l'élément de raclage court (12, 29).

**17.** Semoir selon la revendication 16, caractérisé en ce que la mesure du chevauchement (D) correspond sensiblement à la longueur (B) de l'élément de raclage court (12, 29).

**18.** Semoir selon au moins l'une des revendications 2 à 17, caractérisé en ce que l'élément de raclage long (13, 30) correspond au moins à la double longueur (B) de préférence à environ la triple longueur (B) de l'élément de raclage court (12, 29).

Fig. 1

Fig. 2

Fig. 3